(19) **Europäisches Patentamt / European Patent Office / Office européen des brevets**

(11) **EP 1 651 990 B1**

(12) **EUROPEAN PATENT SPECIFICATION**

(45) Date of publication and mention
of the grant of the patent:
**22.04.2009 Bulletin 2009/17**

(51) Int Cl.:
*G02B 6/35* (2006.01)     *G02B 6/26* (2006.01)

(21) Application number: **04743519.3**

(22) Date of filing: **23.07.2004**

(86) International application number:
**PCT/GB2004/003187**

(87) International publication number:
**WO 2005/012968 (10.02.2005 Gazette 2005/06)**

(54) **VARIABLE OPTICAL ATTENUATOR**

VARIABLES OPTISCHES DÄMPFUNGSGLIED

ATTENUATEUR OPTIQUE VARIABLE

(84) Designated Contracting States:
**AT BE BG CH CY CZ DE DK EE ES FI FR GB GR
HU IE IT LI LU MC NL PL PT RO SE SI SK TR**

(30) Priority: **26.07.2003  GB 0317522**

(43) Date of publication of application:
**03.05.2006 Bulletin 2006/18**

(73) Proprietor: **QinetiQ Limited
London, SW1E 6PD (GB)**

(72) Inventors:
• **MCNIE, Mark E.,
QinetiQ Limited
Malvern,
Worcestershire WR14 3PS (GB)**
• **JENKINS, Richard M.,
QinetiQ Limited
Malvern,
Worcestershire WR14 3PS (GB)**

(74) Representative: **Tocher, Alastair James et al
QinetiQ Limited
Intellectual Property
Malvern Technology Centre
St Andrews Road
Malvern
Worcestershire WR14 3PS (GB)**

(56) References cited:
WO-A-03/036348          GB-A- 2 309 608
US-A1- 2002 150 377     US-A1- 2002 150 378
US-A1- 2003 012 509     US-A1- 2003 113 067
US-B1- 6 501 869

• MIURA T ET AL: "NOVEL VARIABLE OPTICAL
ATTENUATOR BASED ON THREE-
DIMENSIONAL HOLLOW WAVEGUIDE"
JAPANESE JOURNAL OF APPLIED PHYSICS,
PUBLICATION OFFICE JAPANESE JOURNAL OF
APPLIED PHYSICS. TOKYO, JP, vol. 42, no. 6A,
PART 1, June 2003 (2003-06), pages 3477-3478,
XP001192037 ISSN: 0021-4922
• LEE CHAU-HAN ET AL: "Planar lightwave circuit
design for programmable complementary
spectral keying encoder and decoder"
ELECTRONICS LETTERS, IEE STEVENAGE, GB,
vol. 35, no. 21, 14 October 1999 (1999-10-14),
pages 1813-1815, XP006012839 ISSN: 0013-5194

**Description**

The present invention relates to a variable optical attenuator (VOA) device, and more particularly to a VOA incorporating hollow core optical waveguides formed in a semiconductor substrate.

Telecommunication and data networks are increasingly being implemented using optical components. To enable the power of an optical beam to be reduced in a controlled manner various types of variable optical attenuator (VOA) have been developed. In particular, VOAs are used as a convenient way of providing power equalisation in optical fibre networks and the like.

WO01/75503 describes a known VOA device in which a light beam is coupled from an input waveguide to an output waveguide via an optical path that includes a region in which the beam propagates through free space. A beam occluding MEMS shutter is located adjacent the free space gap and linear movement of the shutter into, and out of, the path of the beam provides controllable beam attenuation. VOA devices are also known in which a surface micro-machined shutter is provided in a free space region between solid core waveguides. A disadvantage of such devices is the requirement to provide a relatively large amount of shutter travel to provide the required attenuation. Devices of this type are thus relatively power hungry, and dispersion effects associated with the region of free space propagation can increase optical losses.

It is also known, for example see US patents 4 516 827, 5 915 063 and 6 137 941, and published US patent application 2003/0012509A1, to provide VOA devices in which light is coupled from an input optical fibre to an output optical fibre via reflection from a reflective surface. In such devices, movement (e.g. tilting) of the reflective surface provides control over the amount of light coupled from the input optical fibre to the output optical fibre. Similar devices formed using solid core or "rib" input and output waveguides are also known.

Although reflective VOA devices as described in US4516827, US5915063 and US6137941 are typically less power hungry than shutter based devices of WO01/75503, the optical fibres have to be aligned with respect to the reflective surface with a high degree of accuracy. In order to ensure accurate control of beam attenuation it is also necessary to provide accurate control of movement of the reflective element. Furthermore, the robustness of such devices can be low and any mechanical shock can cause misalignment of the reflective element to the optical fibre thereby reducing device performance.

It is an object of the present invention to mitigate at least some of the aforementioned disadvantages to provide an improved VOA device.

Published UK patent application GB 2 309 608 describes a radiation field analyser incorporating a mode converter which is able to generate a beam having a desired spatial mode composition within a hollow-core waveguide. The mode converter operates by retro-reflecting fundamental mode radiation output from a hollow waveguide back into the same waveguide by means of a tiltable mirror. The inclination of the mirror to the longitudinal axis of the hollow-core waveguide determines the spatial modes excited in the hollow-core waveguide, and also the efficiency with which fundamental mode radiation is coupled back into the hollow-core waveguide, after retro-reflection at the mirror.

T. Miura et al , in the Japanese Journal of Applied Physics, 42, (2003), pp 3477-3478, describe a variable optical attenuator based on a hollow waveguide of variable cross-section. Adjustment of the waveguide's cross-section alters the degree of confinement of radiation guided in the hollow waveguide, causing a corresponding change in the attenuation provided by the waveguide.

Published US patent application 2002/0150378 describes a variable optical attenuator in which light output by a first waveguide is reflected into a second waveguide by a mirror having a reflectivity which varies across its surface. Displacement of the mirror varies the attenuation of light output from the first waveguide and coupled into the second waveguide.

Published US patent application 2002/0150377 describes an optical attenuator in which light output from a first waveguide is coupled into a second waveguide after reflection from a reflective membrane. The membrane may be deformed to a varying extent by electrostatic actuation, thus providing a variable degree of coupling of light from the first to the second waveguide.

Lee at al, in Electronics Letters 35, No 21, October 1999, describe a fibre-optic attenuator in the form of a fibre-optic interferometer having a single input/output port. By controlling phase-shifting elements of the device the attenuation of light passing through the device may be controlled.

Published international application WO 03/036348 discloses a variable attenuator in which light from a first optical fibre is coupled into a second optical fibre via one or two tiltable mirrors. Variation of the tilt of the mirrors affects the efficiency with which light is coupled between the two fibres.

According to a first aspect of the invention, a variable optical attenuator device comprises features as specified in claim 1. This arrangement removes the requirement for lensed fibres or separate coupling lenses to mode match either hollow core waveguide to an optical fibre.

The device of the present invention thus uses the orientation (i.e. the position or angular alignment) of the moveable reflective element to control the efficiency with which light is coupled from the first optical waveguide to the second optical waveguide. As described in more detail below, the device can thus provide control over the amount of light coupled from the first optical waveguide into the fundamental mode of the second optical waveguide thereby allowing the optical attenuation to be varied.

The optical path from the input of the attenuator to the output thereof may comprise a free-space region between the output of the first hollow-core multimode waveguide and the input of the second such waveguide, the attenuator being arranged such that, in use thereof, a beam propagating in said free-space region converges towards and/or diverges away from a re-imaging point.

The VOA device of the present invention may be a standalone component, or may form part of a hollow core planar light circuit (PLC) of the type described in PCT patent application GB2003/000331. In a PLC configuration, the use of hollow core optical waveguides to guide light to and from the coupling means will remove the fibre end reflections that are typically associated with the optical fibre or rib waveguide devices of the prior art. Hence, index matching gels or epoxies, or antireflection coatings are not required on the faces of the first and second waveguides and hence the device is cheaper to fabricate. Furthermore, the use of hollow core optical waveguides allows the device to handle higher optical power.

It should be noted that when hollow core optical waveguide structures are produced, the hollow core is likely to fill with air. However, this should be seen in no way as limiting the scope of this invention. The hollow core may contain any fluid (for example a liquid or an inert gas such as nitrogen) or be a vacuum. The term hollow core simply means a core which is absent any solid material. Furthermore, the terms "light" and "optical" are used herein to refer to any electromagnetic radiation having a wavelength from the deep ultraviolet to the far infra-red. In fact, a skilled person would also appreciate that the present invention could be implemented for use with almost any wavelength of radiation; for example microwave or x-ray radiation.

Advantageously, the at least one moveable reflective element has a controllable angular alignment with respect to at least one of said first and second optical waveguides. In other words, a VOA is provided that comprises a first optical waveguide, a second optical waveguide and coupling means for controllably coupling light from the first optical waveguide to the second optical waveguide, the coupling means comprising a moveable reflective element having a controllable angular orientation with respect to at least one of said first and second optical waveguides, wherein the first and second waveguides are hollow core optical waveguides. A device of the present invention can thus use rotation of a moveable reflective element to control the coupling of light from the first optical waveguide to the second optical waveguide.

Advantageously, the device is arranged such that, in use, variation of the angular orientation of the moveable reflective element produces substantially no lateral displacement of the reflected light beam with respect to the second hollow core optical waveguide. In other words, the reflected optical beam stays substantially centred on the aperture of the second hollow core optical waveguide during operation. In such an arrangement, substantially all of the light will be coupled into the second hollow core optical waveguide and the angular orientation of the reflective element is used to control the angle of incidence of the light with respect to the second hollow core optical thereby controlling the optical modes of the second hollow core optical waveguide into which the beam is coupled. Alternatively, the device may advantageously be arranged such that lateral displacement of the beam with respect to the centre of the input aperture of the second hollow core optical waveguide is also provided. Any such lateral displacement will control the total amount of light that is coupled into the second hollow core optical waveguide; i.e. by an aperture type effect.

The at least one moveable reflective element may also or alternatively have a controllable position with respect to at least one of said first and second optical waveguides. In other words, a change in the position of the moveable reflective element (e.g. linear translation of the element) may be used to steer the optical beam toward the entrance of the second optical fibre from a different angle and/or to a different lateral position.

Advantageously, the first and second optical waveguides are formed in a common substrate. Forming the first and second optical waveguides in a common substrate allows accurate alignment of the optical waveguides with respect to one another.

The moveable reflective element may also be advantageously formed from, or aligned in, the common substrate. For example, the moveable reflective element may advantageously comprise a micro-electro-mechanical system (MEMS) component formed monolithically in the common substrate. In this manner, the MEMS component of the moveable reflective element can be formed in the same process as the hollow core waveguides thereby providing a simple way to produce a VOA without requiring additional processing or device assembly. Alternatively, the moveable reflective element may conveniently comprise a MEMS component hybridly attached to the common substrate. In particular, the moveable reflective component may advantageously be held in alignment in an alignment slot formed in the common substrate.

In this manner, the present invention alleviates the problem found with prior art VOA devices of the type described in US4516827, US5915063 and US6137941 of having to align optical fibres precisely to a moveable reflective element. The invention thus allows the first and second optical waveguides to be formed in a manner that ensures they remain in alignment with the moveable reflective element.

Conveniently, the moveable reflective element comprises a reflective coating. The material providing the reflective coating may be a layer of metal such as gold, silver or copper. Metals will exhibit a suitably low refractive index over a wavelength range that is governed by the physical properties of the metal; standard text books such as "the handbook of optical constants" by E. D. Palik, Academic Press, London, 1998, provide accurate data on the wavelength dependent refractive indices of various materials. In particular, gold has a refractive index less than that of air at wavelengths within the range of around 500nm to 2.2μm; this encompasses wavelengths within the important telecommunications band of 1400nm to 1600nm. Copper exhibits a refractive index less than unity over the wavelength range of 560nm to 2200nm, whilst silver has similar refractive index properties over a wavelength range of 320nm to 2480nm.

A layer of metal may be deposited using a variety of techniques known to those skilled in the art. These techniques include sputtering, evaporation, chemical vapour deposition (CVD) and (electro or electro-less) plating. CVD and plating techniques allow the metal layers to be deposited without significant direction dependent thickness variations. Sputtering using a rotating sample and/or source would also provide more even coverage. Plating techniques are especially advantageous as they permit batch (i.e. multi-substrate parallel) processing to be undertaken. In particular, electro-less plating is preferred for conformality.

A skilled person would recognise that adhesion layers and/or barrier diffusion layers could be deposited prior to depositing the layer of metal. For example, a layer of chrome or titanium could be provided as an adhesion layer prior to the deposition of gold. A diffusion barrier layer, such as platinum, may also be deposited on the adhesion layer prior to gold deposition. Alternatively, a combined adhesion and diffusion layer (such as titanium nitride, titanium tungsten alloy or an insulating layer) could be used.

The reflective coating may also be provided by a stack comprising layers of any one or more of metal, dielectric, or semiconductor; for example dielectric stacks or metal-dielectric stacks. The reflective properties of any multiple layer stack may also be dependent, to some extent, on the properties of the material on which they are deposited. Hence, the material of the substrate may also form a base layer, and be a part of, any such multiple layer stack.

In the case of a dielectric stack, a person skilled in the art would recognise that the optical thickness of a dielectric layer(s) provides an interference effect that will determine the reflective properties of the coating. The dielectric material may be deposited by CVD or sputtering or reactive sputtering. Alternatively, a dielectric layer could be formed by chemical reaction with a deposited metal layer. For example, a layer of silver could be chemically reacted to produce a thin surface layer of silver halide.

If a reflective coating is provided, the number of materials that can be used to form the substrate is greatly increased. For example, plastic waveguide devices may be fabricated by techniques including hot embossing or injection moulding. The technique involves forming a master. The master may be formed in semiconductor material, such as silicon, using a deep dry etch. Alternatively, the master may be formed by electro deposition of layers using the LIGA or UV LIGA technique. Once the master is formed, the hollow core waveguides may be formed in a plastic substrate by stamping (i.e. pressing) or hot stamping. A master may also be fabricated which is suitable for forming a sub-master that can be used to form the hollow core waveguides in the plastic substrate. Hollow plastic waveguides can thus be formed and coated with a reflective coating. The plastic hollow core waveguides that carry the reflective coating may also be formed from plastic or a polymer. For example, the hollow core waveguides could be formed using a lithographic process on a "spin-on" polymer coating (e.g. SU8 available from Microchem. Corporation)

Advantageously, the reflective element may comprise at least one deformable mirror. Deformation of the mirror can be used to alter the angular orientation of the mirror surface with respect to at least one of the first and second hollow core optical waveguides. Deformation of the mirror can be used to change its focal length and/or to laterally displace the reflected beam with respect to the second hollow core optical waveguide.

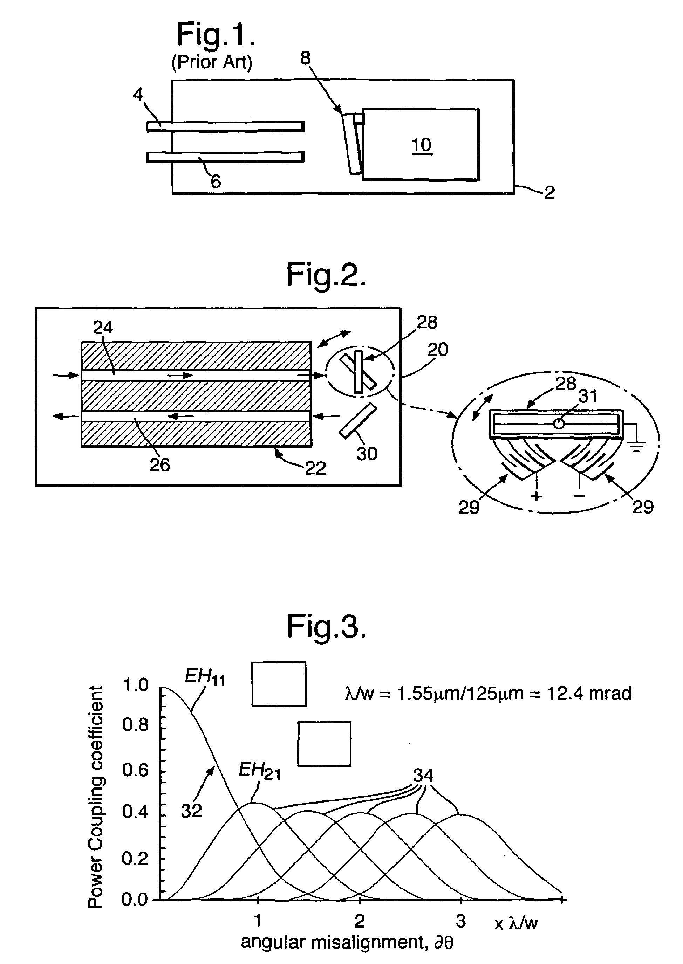

Advantageously, at least one additional reflective element having a fixed angular orientation is provided; the optical beam is then be reflected from both the at least one moveable reflective element and the additional reflective element. The provision of additional reflective elements allows various optical circuits to be implemented. For example, a circuit of the type described in figure 2 below could be implemented in which parallel first and second optical waveguides are formed in a common substrate. The coupling means may also comprise additional optical components; for example lenses, optical filters etc.

The angular orientation of the reflective element controls the amount of light coupled into the fundamental mode of the second optical waveguide. Light not coupled into the fundamental mode of the second optical waveguide is either coupled into the higher order modes of the waveguide or reflected away from the waveguide. Attenuation can be achieved by coupling the second (multi-mode) optical waveguide to a single mode waveguide such as a single mode optical fibre. Only radiation propagating in the fundamental mode will subsequently propagate without significant attenuation in the single mode fibre. The power in any higher order modes will either be dissipated within the second optical waveguide (i.e. not enter the single mode optical fibre) or be attenuated within the single mode optical fibre.

The VOA device of the present invention may also be arranged to operate in multi-mode optical fibre systems. In one such arrangement, the second optical waveguide is arranged to be capable of propagating higher order modes than an output multi-mode optical fibre coupled thereto. For example, the second hollow core optical waveguide may be arranged to propagate light in N modes whilst an associated output multi-mode optical fibre is arranged to propagate light in M modes. If M is less than N, any optical power propagating in the second hollow core waveguide in modes of higher order than M will not be coupled into the output multi-mode optical fibre (and/or will be highly attenuated by the output multi-mode optical fibre) and the power contained therein will hence be dissipated.

In this manner, changes in the angular orientation of the moveable reflective element allow the optical power contained in modes of a higher order than M to be controlled thereby controlling the attenuation imparted by the device. If M is less than or equal to N, attenuation can also be achieved by altering the angular orientation of the reflective element sufficiently to control the total amount of light coupled into the second optical waveguide. This so-called aperture effect allows the amount of light not entering the second hollow core optical waveguide to be controlled.

The first optical waveguide and/or the second optical waveguide may advantageously comprise a tapered waveguide section. In other words, the cross-sectional dimensions of the hollow core optical waveguide may be varied along the length of the waveguide. This would allow, for example, the entrance aperture of the second optical waveguide to have a different cross-sectional dimension to a portion of the second optical waveguide from which radiation is coupled into an output optical fibre. As described below, the dimensions of the waveguide alters the coupling efficiency of a beam having a given lateral or angular misalignment. Hence, tapered waveguides can provide control over device attenuation for a given angular misalignment.

Advantageously, the hollow core optical waveguides of the device (e.g. the first optical waveguide and/or the second optical waveguide) have a substantially rectangular (which herein shall include square) cross-section. A square, or almost square, cross-section hollow core waveguide provides a waveguide in which the losses are substantially polarisation independent and is preferred when the polarisation state of the light is unknown or varying. Dimensioning the waveguide to have a depth greater than its width increases polarisation dependent losses, but may be advantageous when the polarisation state of light propagating through the waveguide is known. Although rectangular cross-section waveguides are convenient, many alternative waveguide shapes could be employed. For example, circular, elliptical, diamond shaped or v-shaped waveguides could be provided.

The internal surface of the hollow core waveguides (e.g. the first optical waveguide and/or the second optical waveguide) may conveniently comprise a reflective coating. The reflective coating applied to the internal surface of the hollow core waveguide may be a metal or stacks of dielectric and/or metal and/or semi-conductor of the type described above. Any coating applied to the internal surface of the hollow core waveguide may be the same as, or different to, any coating applied to the reflective element.

Advantageously, a first optical fibre attachment means is provided to hold in alignment an input optical fibre, the input optical fibre being arranged to couple light into the first optical waveguide. A second optical fibre attachment means may also be conveniently provided to hold in alignment an output optical fibre, the output optical fibre being arranged to receive light from the second optical waveguide.

The optical fibre attachment means may comprise an alignment slot formed in the device that is arranged to clamp an optical fibre in place thereby allowing optical connection to the first and/or second optical waveguides of the device. In the case of solid core fibres, stepped optical fibre alignment slots may be provided to hold both the buffer layer and the cladding. The alignment of the core of a hollow core optical fibre with the hollow core waveguide of the VOA may also be achieved; for example by clamping the optical fibre cladding in a alignment slot using spring clips or micro-grippers. The use of hollow core optical fibres would be especially advantageous as the air core to air core connection would be free from any unwanted reflections.

Advantageously, the second optical fibre attachment means is arranged to receive a single mode optical fibre. In this manner, and as described above, angular movement of the moveable reflective element changes the mode into which light is coupled. Light in the fundamental mode is efficiently coupled into the fundamental mode of the single mode optical fibre; higher order modes are dissipated in the second optical waveguide and/or within the single mode optical fibre.

The device may advantageously comprise a beam dump means. For example, a circular or spiral hollow core waveguide structure could be used to dispose of waste light that is not coupled into the second optical waveguide. This reduces the possibility of noise being introduced due to multiple reflections of waste light. Advantageously, the device is formed in a substrate comprising semiconductor material. Semiconductor substrates, such as Silicon, can be etched to provide hollow core waveguides with high accuracy using micro-fabrication techniques. The substrate may advantageously comprise a multiple layer wafer; for example SiGe or silicon-on-insulator (SOI) or silicon-on-glass. A person skilled in the art would recognise that micro-fabrication techniques typically involve a lithography step to define a pattern, followed by an etch step to transform the pattern in to one or more layers on, or in, the substrate material. The lithography step may comprise photolithography, x-ray or e-beam lithography. The etch step may be performed using ion beam milling, a chemical etch, a dry plasma etch or a deep dry etch (also termed deep silicon etch). Micro-fabrication techniques of this type are also compatible with various layer deposition techniques such as sputtering, CVD and electro-plating.

Although substrates that comprise semiconductor material can advantageously be used, the device could also be formed on a variety of alternative substrate. For example, quartz, silica or glass substrates could be used. Conveniently, the substrate used in the present invention can readily have semiconductor processing techniques applied thereto. It should be noted that although semiconductor processing techniques are, by definition, developed for use with semiconductor substrates they may also be advantageously applied to certain non-semiconductor substrates where the semiconductor properties of the substrate are not required.

Preferably the device is formed in an silicon-on-insulator (SOI) wafer. It should be noted that in the case of certain semi-conductor materials (including silicon) light may be input and/or output from the optical waveguides of the VOA in a direction parallel or normal (i.e. through wafer) to the plane defining the surface of the wafer.

Conveniently, a base portion and a lid portion are provided to form the hollow core waveguide structures of the device. Such an arrangement provides a convenient means of producing the hollow core waveguide and is described in more detail in PCT patent application GB2003/000331. Advantageously, the device is formed by a micro-fabrication technique such as deep reactive ion etching. Preferably, the hollow core optical waveguide are formed in the plane of the substrate; i.e. they are arranged to guide light in a plane substantially parallel to the plane of the substrate.

The invention will now be described, by way of example only, with reference to the following drawings in which;

Figure 1 shows a prior art optical fibre based VOA,

Figure 2 shows a VOA which is not within the scope of the present invention, but the description of which is useful as an aid to understanding the present invention,

Figure 3 shows the coupling efficiency of a beam into a multimode waveguide as a function of offset angle,

Figure 4 shows a further VOA,, useful as an aid to understanding the present invention, that includes a beam dump,

Figure 5 shows a further VOA , useful as an aid to understanding the present invention, having tapered input and output waveguides,

Figure 6 shows a further VOA , useful as an aid to understanding the present invention, that comprises only a single mirror,

Figure 7 shows a further VOA , useful as an aid to understanding the present invention, in which hollow core waveguides guide light throughout the device,

Figure 8 a VOA of the present invention,

Figure 9 illustrates one way in which the invention can employ the so-called re-imaging effect, and

Figure 10 shows a further optical arrangement of the present invention.

Referring to figure 1, a prior art VOA 2 is shown. The VOA 2 comprises an input optical fibre 4, an output optical fibre 6 and a reflective surface 8 mounted on an mechanical actuation means 10. In use, radiation from the input optical fibre 4 is incident on the reflective surface 8 and, after reflection, is received by the output optical fibre 6. Tilting the reflective surface 8 by application of an appropriate control signal to the actuation means 10 alters the amount of reflected light that is coupled into the output optical fibre 6. In this way, variable optical attenuation is achieved.

As described above, this type of arrangement requires precise alignment of the optical fibres and the reflective surface. Obtaining such alignment, and ensuring it is maintained during the operation life of the VOA, can prove complex and costly.

Referring to figure 2, a VOA 20 is shown. The VOA 20 comprises a silicon-on-insulator (SOI) substrate 22 in which a first hollow core optical waveguide 24 and a second hollow core optical waveguide 26 are formed. A lid portion (not shown) is also provided, and is attached to the SOI substrate 22 after the channels of the first and second hollow core optical waveguides have been formed therein.

The first and second hollow core optical waveguides 24 and 26 are dimensioned to support multi-mode propagation and are arranged to run parallel to one another along the substrate. A first solid core fundamental mode fibre (not shown) is used, possibly in conjunction with ball or GRIN lenses, to couple light into the fundamental mode of the first hollow core optical waveguide 24. This light then exits the first hollow core optical waveguide 24 and is coupled into the second hollow core optical waveguide 26 after reflection from a rotateable mirror 28 and a fixed mirror 30.

Rotation of the mirror 28 (i.e. variation of the so-called offset angle) alters the relative power coupled into each of the various modes that can be excited in the second (multi-mode) hollow core optical waveguide. Appropriate angular alignment of the mirror 28 permits all the optical power to be coupled into the fundamental mode, however any angular misalignment results in optical power being coupled into the various higher order modes.

A second solid core fundamental mode optical fibre (not shown) is provided to receive the light propagating in the second optical waveguide. However, light will only be coupled efficiently into the fundamental mode fibre from the fundamental mode of the second optical waveguide; the higher order modes are either not coupled into the fundamental mode fibre or are highly attenuated in the fibre such that the optical power contained therein is dissipated within the device. In this manner, controlling the amount of light that is coupled into the fundamental mode of the second hollow core optical waveguide can be seen to provide control over the optical power propagating in the second fundamental mode optical fibre. In other words, variation of the angular orientation of the mirror 28 controls the beam attenuation imparted by the device.

Rotation of the mirror 28 about a pivot point 31 is provided by a curved comb electrostatic arrangement comprising inter-digitated electrode elements 29. Although a central pivot point is shown, the pivot point may be located at any point along the mirror. Similarly, the actuation mechanism or mechanisms may be located to act at any point along the mirror. A skilled person would recognise that numerous alternative types of micro-electromechanical system (MEMS) components could be used to provide the required motion. For example, the MEMS actuation component may be electro-magnetic, bimorph, piezoelectric, or an electro-thermal MEMS actuation mechanism (e.g. a bent beam arrangement). More detail on MEMS device actuation technologies and the associated fabrication techniques can be found in "Fundamental of Microfabrication" by Marc Madou, published by CRC Press (Boca Raton) in 1997; ISBN 0-8493-9451-1.

The power coupling efficiency into the various modes of a multi-mode hollow core waveguide is shown as a function of angular misalignment ($\partial\theta$) in figure 3. Curve 32 shows the power coupled into the fundamental mode, whilst curves 34 show the optical power coupled into the higher order modes. It can thus be seen that varying the angular misalignment (e.g. by rotating the mirror 28) allows the proportion of light coupled into the fundamental mode of a waveguide to be precisely controlled. Increasing the angular misalignment further, or introducing a lateral displacement of the beam, will also cause the total optical power coupled into all modes of the fibre to be reduced (i.e. light will be reflected away from the second hollow core optical waveguide).

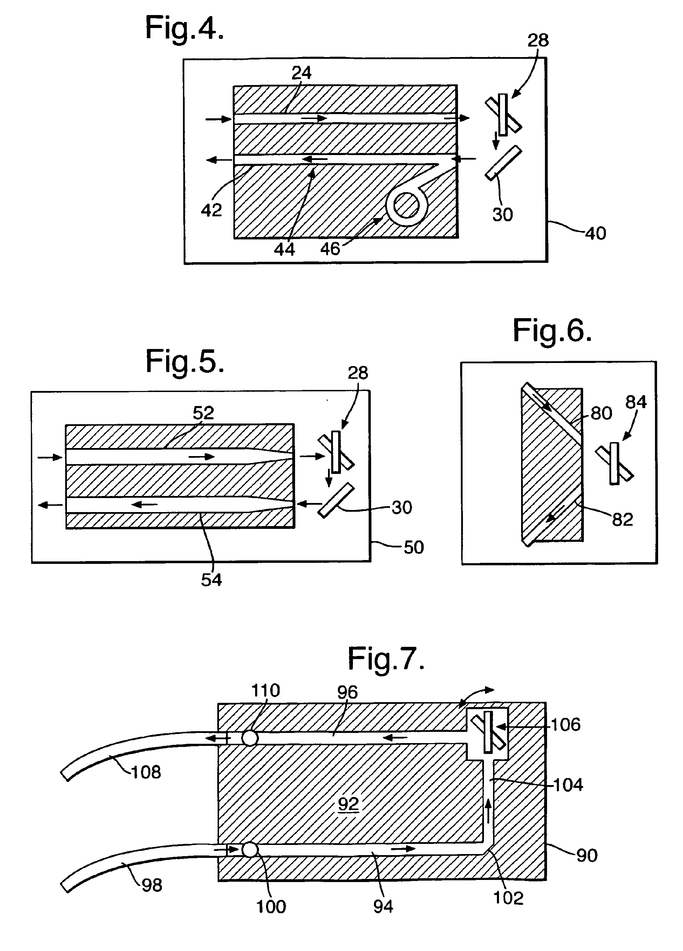

Referring to figure 4, an alternative VOA device 40 is shown. Features similar to those described with reference to figure 2 are indicated by common reference numerals. The VOA 40 comprises a first hollow core optical waveguide 24 from which light is coupled into a second hollow core optical waveguide 42 after reflection from a rotateable mirror 28 and a fixed mirror 30. The second hollow core optical waveguide 42 comprises a straight hollow core waveguide section 44 and a hollow core beam dump waveguide section 46.

In use, rotation of the rotateable mirror 28 is used to alter the angular misalignment of the beam to the straight section 44 of the second hollow core optical waveguide. In the device 40, the majority of the optical power which is not coupled into the fundamental mode of the straight section 44 of the second hollow core optical waveguide is coupled into the beam dump waveguide section 46.

Referring to figure 5, a further alternative VOA device 50 is shown. Features similar to those described with reference to figures 2 and 4 are indicated by common reference numerals. The VOA 50 comprises a first tapered hollow core optical waveguide 52 from which light is coupled into a second tapered hollow core optical waveguide 54 after reflection from a rotateable mirror 28 and a fixed mirror 30.

The reduced cross-sectional dimensions of the entrance of the second tapered optical waveguide 54 decrease the angular misalignment sensitivity but increase the lateral alignment sensitivity. In other words, the use of a smaller waveguide entrance provide a VOA having a reduced amount of beam attenuation for a given change in angular misalignment due to rotation of the mirror 28. It can thus be seen that selection of the hollow core waveguide dimensions can be used to select the amount of attenuation that is produced for a given mirror rotation.

It should be noted that although the optical arrangements described with reference to figure 2 and 5 above show arrangements in which light is routed through 180° using two mirrors (one of which is fixed), a similar effect could be obtained using a single rotateable mirror or additional mirrors. In other words, the skilled person would appreciate the numerous optical layouts that could be provided to implement the present invention.

Figure 6 illustrates how light could be coupled from a first hollow core optical waveguide 80 to a second hollow core optical waveguide 82 by reflection from only a rotateable mirror 84. In this case, the first and second hollow core optical waveguides are positioned orthogonally to one another. It should also be noted that reflection through around 90° is not essential, and that light may be directed at the mirrors at any required angle of incidence.

Referring to figure 7, a further VOA device 90 formed in a silicon substrate 92 is shown. The VOA 90 comprises first and second hollow core optical waveguides 94 and 96 respectively. Light from an input optical fibre 98 is coupled to the fundamental mode of the first optical waveguide 94 via a ball lens 100. This light is then reflected from a fixed monolithic mirror 102 and directed along a further section of hollow core optical waveguide 104 to a rotateable mirror 106. In the manner described above, rotation of the mirror 106 is used to control the amount of light coupled into the fundamental mode of the second hollow core waveguide 96. Light from the fundamental mode of the second hollow core waveguide is then coupled into a single mode output optical fibre 108 via a second ball lens 110. Instead of balls lenses, lensed optical fibres may be used.

The inclusion of the further section of hollow core optical waveguide 104 ensures any optical losses that may be associated with free space propagation of light are reduced. Furthermore, forming the waveguides and mirrors on a single substrate increases the alignment accuracy that can be obtained. The VOA 90 may also be incorporated with other optical components (e.g. lasers, wavelength filters etc) on a single substrate to form a higher complexity planar light circuit.

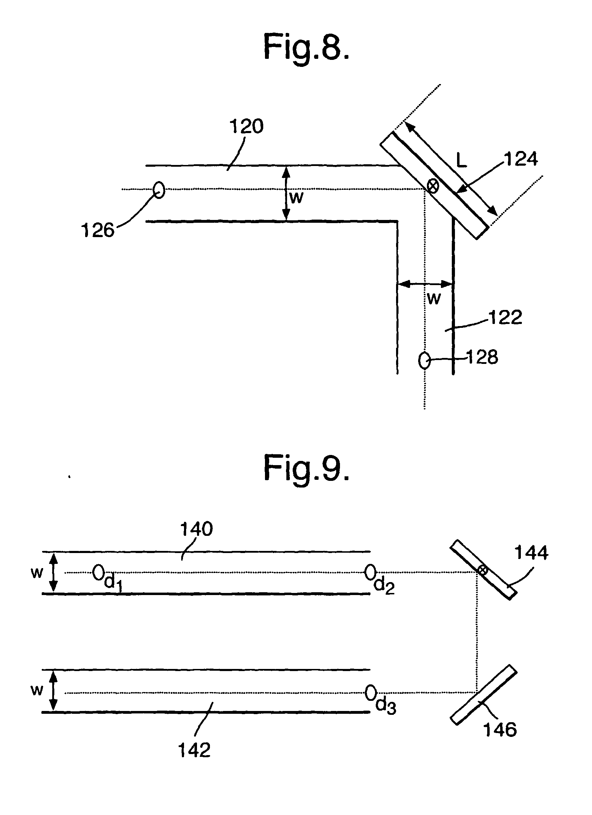

It should be noted that the actual mirror movement required to vary the beam attenuation is actually quite small. The amount of movement is illustrated with reference to figure 8.

Figure 8 shows a first optical waveguide 120 linked to an orthogonally orientated second waveguide 122 by a moveable reflective mirror 124. As shown in figure 3, the switch off angle (i.e. the angle when no light is coupled into the fundamental mode of the second waveguide) is given by $2\lambda/W$. For a waveguide width of $W = 100\mu m$, and a wavelength of light of $1\mu m$, the mirror is thus only required to change angle by twenty milli-Radians to provide full attenuation.

Simple geometry allows the required mirror length (L) to be estimated to be at least $\sqrt{2}$ times the waveguide width (W). Therefore, the required amount of displacement of the mirror end that is necessary to fully attenuate the beam is simply given by $\sqrt{2} \times \lambda$. This assumes the mirror is $\sqrt{2}$ times the waveguide width (W) and is arranged to pivot about its centre. Hence, for light having a wavelength of $1\mu m$, the mirror ends need to move by only about $1.4\mu m$.

The VOA is arranged such that "re-imaging" of an input beam injected into the hollow core waveguide from an input optical fibre occurs in the vicinity of the entrance of the output optical fibre. The re-imaging phenomena is explained in more detail elsewhere; for example see PCT patent application GB2003/000331. In short, the hollow core optical waveguide structure to which the optical fibres are coupled is formed so as to act as a multi-mode waveguide. Appropriately dimensioning the multimode waveguide produces various beam splitting and combining functions in which beams can be produced that are images of the input beam.

In particular, rectangular or square cross-section hollow multi-mode waveguides can be designed to provide re-imaging of symmetric, anti-symmetric or asymmetric optical fields by designing the length of the waveguide to have an appropriate relationship to its width and depth. In other words, the Gaussian input profile of a input beam is re-imaged (i.e. reproduced) after propagating a certain distance along a given waveguide. This effect also gives rise to beam replication; i.e. multiple images of the beam being formed a distances shorter than the re-imaging length. This effect is described previously in US5410625 and provides the basis for multi-mode interference (MMI) beam splitting devices.

As an example, a symmetric field in a square sectioned waveguide will have a re-imaging length is given by the square of the waveguide width over the wavelength of the propagating radiation. Re-imaging of the symmetric field occurs at the re-imaging length and multiples of the re-imaging length. Inbetween the re-imaging points, beam replication points and points of maximum field expansion are found.

For the case of a $50.0\mu m$ wide hollow waveguide and $1.55\mu m$ radiation, the re-imaging length is thus 1.613 mm. The symmetric field would be re-imaged at this length and also at integer multiples of this length, i.e. 3.23 mm, 4.84 mm etc. For example, a $TEM_{00}$ Gaussian input beam from a single mode optical fibre could be re-imaged at distances of 1.613 mm.

Alternatively, for the case of an asymmetric optical field, re-imaging occurs at eight times the length required for symmetric field re-imaging, i.e. at 12.09 mm for a $50.0\mu m$ wide hollow waveguide. A mirror image of the asymmetric field is also formed at half this length i.e. at 6.05 mm. In particular, offsetting the input from the centre line of the multimode region provides an asymmetric input that is re-imaged at pre-determined distances along the guide at an equivalent offset on either side of the centre line.

In the case of a rectangular waveguide where the depth and width of the waveguide are substantially different, the re-imaging lengths associated with the two waveguide cross-sectional dimensions (e.g. depth and width) are themselves different. However, by arranging that the relationship between the dimensions of the rectangular hollow waveguide is such that re-imaging is produced at identical lengths for the particular width and depth, any field can be re-imaged. Thus, a symmetric field can be re-imaged in a hollow rectangular waveguide by arranging that the re-imaging lengths associated with axes of width $w_1$ and $w_2$ to be identical.

In figure 8, a first point 126 is shown that is separated from a second point 128 by a certain optical path length. This optical path length is selected to be a multiple of the re-imaging distance (say N times the re-imaging distance where N is an integer); a symmetric field at the first point 126 is replicated at the second point 128. This allows the $TEM_{00}$ Gaussian input beam from a single mode optical fibre having a fibre end at the first point 126 to be replicated at the second point 128. If the end of an output single mode optical fibre is located at the second point, the replicated Gaussian beam will be efficiently coupled into the output optical fibre. This arrangement thus removes the requirement to use lenses fibres or separate lenses to mode match the fibre and hollow core waveguide.

Referring to figure 9, it is shown how the re-imaging effect may also be used in VOAs of the present invention in which the beam propagates through a free space region. The VOA of figure 9 comprises a first hollow core optical waveguide 140 and a second hollow core optical waveguide 142. A moveable mirror 144 and a fixed position mirror 146 are provided the coupled light from the first hollow core waveguide to the second hollow core waveguide.

It has been found that, although the re-imaging effect is based on the interference of multiple guided modes, the device may be arranged to benefit from the re-imaging effect despite the inclusion of a small free space region within the optical path through the device. Figure 9 shows a device having an optical path with a first point $d_1$ where a $TEM_{00}$ Gaussian beam is formed within the first hollow core waveguide 140. The end of an optical fibre end may be located at $d_1$ or may be placed a multiple of the re-imaging distance away from $d_1$ such that a re-imaged beam is formed at $d_1$. The optical path length between a third point $d_3$ and the first point $d_1$ is arranged to equal the re-imaging distance.

As the beam converges to, or diverges away from, a re-imaging point there is short distance over which there is no interaction with (i.e. no reflection from) the walls of the waveguide. In other words, no guiding is necessary a certain distance either side of a re-imaging point. It can be shown that this "non-guiding" length ($z_c$) either side of a re-imaging point is approximately given by:

$$z_c = \frac{\pi(0.7w)^2}{4\lambda} \qquad (1)$$

where $\lambda$ is the wavelength of light and w is the multi-mode guide width (i.e. the width of the first and second hollow core optical waveguide).

The second point $d_2$ is located the non-guiding length ($z_c$) away from the third (re-imaging) point $d_3$. Hence, the arrangement is such that the free space propagation from the first hollow core waveguide to the second hollow core waveguide does not have any detrimental effect on the re-imaging phenomena. A plurality of re-imaging points will thus also be formed along the second waveguide at multiples of the re-imaging length from the point $d_3$. Light may be readily coupled in to an optical fibre with minimal optical loss at any of these re-imaging points.

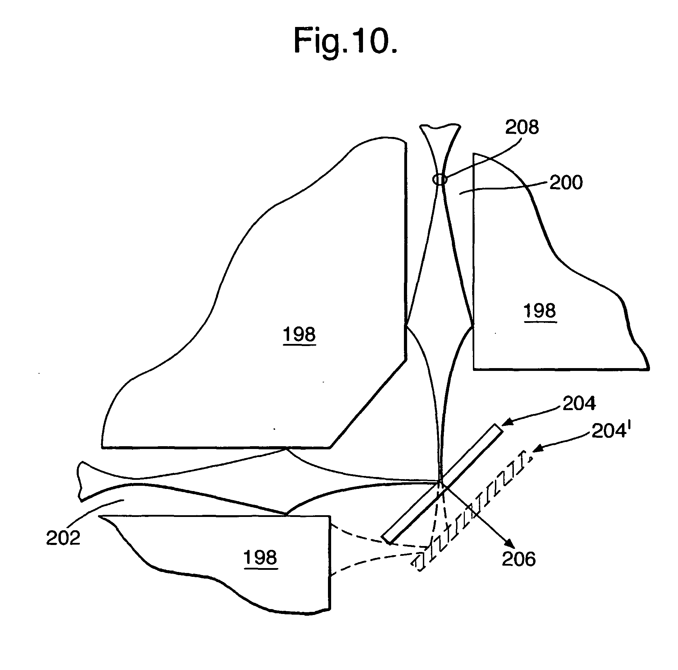

Referring to figure 10, a further VOA of the present invention is illustrated. The VOA comprises a substrate 198 in which a first optical waveguide 200 is optically coupled to a second optical waveguide 202 by a translatable mirror 204. The mirror 204 is arranged to move in the direction indicated by arrow 206 from the non-deflected position shown to the fully deflection position 204'.

A first re-imaging point is located at position 208, and the mirror surface (when the mirror is in the non-deflected position) is located a multiple of the re-imaging distance away from position 208. Light is thus efficiently coupled from the first optical waveguide 200 to the second optical waveguide 202 in the manner described above.

Movement of the mirror 204 away from the non-deflected position toward position 204' causes a lateral displacement of the beam that is incident on the second optical waveguide 202. In addition, the increased coupling efficiency associated with the re-imaging effect are also reduced; i.e. the beam is also broadened in the vicinity of the entrance aperture. The optical coupling efficiency thus reduces as the mirror 204 is moved in the direction 206. It can therefore be seen that lateral displacement of a reflective element can provide a similar VOA function described to that described above for angular displacement of a reflective element. In summary, angular and/or lateral movement of a reflective element may thus provide a VOA having the various advantages described above.

**Claims**

1. A variable optical attenuator device comprising a first hollow-core multimode optical waveguide (120; 140; 200) and an input optical fibre arranged to inject an input beam into said first hollow-core multimode optical waveguide (120; 140; 200), a second hollow core multimode optical waveguide (122; 142; 202) coupled to an output optical fibre and at least one moveable reflective element (124; 144; 204) having a variable angular orientation with respect to at least one of said first and second hollow-core multimode optical waveguides, wherein the device is arranged such that, in use, the optical beam output by the first hollow-core multimode optical waveguide is reflected from the at least one moveable reflective element and the angular orientation of the at least one moveable reflective element determines the efficiency with which the optical beam is coupled into the second hollow-core multimode optical waveguide, whereby the device is arranged such that in use thereof re-imaging of the input beam occurs in the vicinity of the entrance of the output optical fibre.

2. A device according to claim 1 wherein said optical path comprises a free-space region between the output of the first hollow-core multimode optical waveguide and the input of the second such waveguide, the attenuator being arranged such that in use thereof, a beam propagating in said free-space region converges towards and/or diverges away from a re-imaging point.

3. A device according to claim 1 or claim 2 wherein said at least one moveable reflective element has a controllable angular alignment with respect to at least one of said first and second optical waveguides.

4. A device according to claim 3 and arranged such that, in use, variation of the angular orientation of the moveable reflective element produces substantially no lateral displacement of the optical beam with respect to the second hollow core optical waveguide.

5. A device according to claim 1 or claim 2 wherein said at least one moveable reflective element has a controllable position with respect to at least one of said first and second optical waveguides.

6. A device according to any preceding claim wherein the first and second hollow core optical waveguides are formed in a common substrate.

7. A device according to claim 6 wherein the moveable reflective element comprises a micro-electro-mechanical system (MEMS) component formed in the common substrate.

8. A device according to claim 6 wherein the moveable reflective element comprises a hybrid MEMS component attached to the common substrate.

9. A device according to claim 8 wherein the moveable reflective component is held in alignment in an alignment slot formed in the common substrate.

10. A device according to any preceding claim wherein the moveable reflective element comprises a reflective coating.

11. A device according to any preceding claim wherein the moveable reflective element has a curved reflective surface.

12. A device according to any preceding claim wherein the moveable reflective element comprises at least one deformable mirror.

13. A device according to any preceding claim and further comprising at least one additional reflective element having a fixed orientation, wherein, in use, the optical beam is reflected from both the at least one additional reflective element and the at least one moveable reflective element.

14. A device according to any preceding claim wherein further hollow core optical waveguides are provided to substantially guide the optical beam from the first hollow core multimode optical waveguide to the second hollow core multimode optical waveguide.

15. A device according to any preceding claim wherein the first hollow-core multimode optical waveguide and/or the second hollow-core multimode optical waveguide comprise a tapered section.

16. A device according to any preceding claim wherein the first hollow-core multimode optical waveguide and/or the second hollow-core multimode optical waveguide are of substantially rectangular cross section.

17. A device according to any preceding claim wherein the internal surfaces of the first hollow-core multimode optical waveguide and/or the second hollow-core multimode optical waveguide carry a reflective coating.

18. A device according to any preceding claim wherein a first optical fibre attachment means is provided to hold in alignment an input optical fibre, the input optical fibre being arranged to couple light into the first hollow-core multimode optical waveguide.

19. A device according to any preceding claim wherein a second optical fibre attachment means is provided to hold in alignment an output optical fibre, the output optical fibre being arranged to receive light from the second hollow-core multimode optical waveguide.

20. A device according to claim 19 wherein the second optical fibre attachment means is arranged to receive a single mode optical fibre.

21. A device according to any preceding claim and further comprising a beam dump.

**22.** A device according to any preceding claim that is formed in a substrate comprising semiconductor material.

**23.** A device according to claim 20 wherein the substrate comprises a silicon-on-insulator (SOI) wafer.

**24.** A device according to any preceding claim wherein the hollow cores of the first and second hollow-core multimode optical waveguides are formed by a base portion and a lid portion.

**25.** A device according to any preceding claim formed by micro-fabrication techniques.

**26.** A device according to claim 25 wherein the micro-fabrication technique includes deep reactive ion etching.

**27.** A device according to any preceding claim wherein the hollow core optical waveguides are arranged to guide light in a plane substantially parallel to the plane of the substrate.

**Patentansprüche**

**1.** Variable optische Abschwächvorrichtung, die umfaßt:

- einen ersten Multimode-Hohlfaser-Lichtwellenleiter (120; 140; 200) und
- eine optische Eingangsfaser, die derart angeordnet ist, dass sie einen Eingangsstrahl in den ersten Multimode-Hohlfaser-Lichtwellenleiter (120; 140; 200) einspeist,
- einen zweiten Multimode-Hohlfaser-Lichtwellenleiter (122; 142; 202), der mit einer optischen Ausgangsfaser und mindestens einem beweglichen reflektierenden Element (124; 144; 204) gekoppelt ist, das, bezogen auf mindestens einen der Multimode-Hohlfaser-Lichtwellenleiter, den ersten oder den zweiten, eine variable Winkelausrichtung aufweist,

wobei die Vorrichtung derart angeordnet ist, dass der optische Ausgangsstrahl des ersten Multimode-Hohlfaser-Lichtwellenleiters im Betrieb von dem mindestens einen beweglichen reflektierenden Element reflektiert wird, und die Winkelausrichtung des mindestens einen beweglichen reflektierenden Elements die Effizienz bestimmt, mit der der optische Strahl in den zweiten Multimode-Hohlfaser-Lichtwellenleiter eingekoppelt wird, wobei die Vorrichtung derart angeordnet ist, dass im Betrieb das Re-Imaging des Eingangsstrahls in der Nähe des Eingangs der optischen Ausgangsfaser erfolgt.

**2.** Vorrichtung nach Anspruch 1, bei der ein Strahlengang einen Bereich mit freiem Raum zwischen dem Ausgang des ersten Multimode-Hohlfaser-Lichtwellenleiters und dem Eingang des zweiten Multimode-Hohlfaser-Lichtwellenleiters aufweist, wobei der Abschwächer derart angeordnet ist, dass im Betrieb ein Lichtstrahl, der sich in dem Bereich mit freiem Raum ausbreitet, sich einem Re-Imaging-Punkt nähert oder sich von diesem entfernt.

**3.** Vorrichtung nach Anspruch 1 oder 2, bei der das mindestens eine bewegliche reflektierende Element eine steuerbare Winkelausrichtung, bezogen auf den mindestens einen Lichtwellenleiter, den ersten oder den zweiten, aufweist.

**4.** Vorrichtung nach Anspruch 3, die derart angeordnet ist, dass im Betrieb eine Änderung der Winkelausrichtung des beweglichen reflektierenden Elements im Wesentlichen keine seitliche Verschiebung des Lichtstrahls, bezogen auf den zweiten Multimode-Hohlfaser-Lichtwellenleiter, erzeugt.

**5.** Vorrichtung nach Anspruch 1 oder 2, bei der das mindestens eine bewegliche reflektierende Element eine steuerbare Position, bezogen auf mindestens einen Lichtwellenleiter, den ersten oder den zweiten, aufweist.

**6.** Vorrichtung nach einem der vorhergehenden Ansprüche, bei der erste und der zweite Multimode-Hohlfaser-Lichtwellenleiter in einem gemeinsamen Substrat ausgebildet sind.

**7.** Vorrichtung nach Anspruch 6, bei der das bewegliche reflektierende Element ein mikroelektro-mechanisches System (MEMS)-Bauteil darstellt, das im gemeinsamen Substrat ausgebildet ist.

**8.** Vorrichtung nach Anspruch 6, bei der das bewegliche reflektierende Element ein Hybrid-MEMS-Bauteil darstellt, das am gemeinsamen Substrat angebracht ist.

9. Vorrichtung nach Anspruch 8, bei der das bewegliche reflektierende Element in einem Ausrichtungsschlitz, der im gemeinsamen Substrat ausgebildet ist, in Ausrichtung gehalten wird.

10. Vorrichtung nach einem der vorhergehenden Ansprüche, bei der das bewegliche reflektierende Element eine reflektierende Beschichtung aufweist.

11. Vorrichtung nach einem der vorhergehenden Ansprüche, bei der das bewegliche reflektierende Element eine gebogene reflektierende Oberfläche aufweist.

12. Vorrichtung nach einem der vorhergehenden Ansprüche, bei der das bewegliche reflektierende Element mindestens einen verformbaren Spiegel aufweist.

13. Vorrichtung nach einem der vorhergehenden Ansprüche, die ferner mindestens ein zusätzliches reflektierendes Element umfaßt, das eine feste Ausrichtung aufweist, bei welcher der Lichtstrahl im Betrieb sowohl von dem mindestens einen zusätzlichen reflektierenden Element als auch von dem mindestens einen beweglichen reflektierenden Element reflektiert wird.

14. Vorrichtung nach einem der vorhergehenden Ansprüche, bei der weitere Hohlfaser-Lichtwellenleiter zur Lenkung des Lichtstrahls im Wesentlichen vom ersten Multimode-Hohlfaser-Lichtwellenleiter zum zweiten Multimode-Hohlfaser-Lichtwellenleiter vorgesehen sind.

15. Vorrichtung nach einem der vorhergehenden Ansprüche, bei der der erste Multimode-Hohlfaser-Lichtwellenleiter und/oder der zweite Multimode-Hohlfaser-Lichtwellenleiter einen sich verjüngenden Abschnitt aufweisen.

16. Vorrichtung nach einem der vorhergehenden Ansprüche, bei der der erste Multimode-Hohlfaser-Lichtwellenleiter und/oder der zweite Multimode-Hohlfaser-Lichtwellenleiter einen im Wesentlichen rechtwinkligen Querschnitt aufweisen.

17. Vorrichtung nach einem der vorhergehenden Ansprüche, bei der der die Innenflächen des ersten Multimode-Hohlfaser-Lichtwellenleiters und/oder des zweiten Multimode-Hohlfaser-Lichtwellenleiter eine reflektierende Beschichtung tragen.

18. Vorrichtung nach einem der vorhergehenden Ansprüche, bei der eine Befestigungsvorrichtung der ersten optischen Faser zur Aufrechterhaltung der Ausrichtung einer optischen Eingangsfaser vorgesehen ist, bei der die optische Eingangsfaser so angeordnet ist, dass sie in den ersten Multimode-Hohlfaser-Lichtwellenleiter Licht einkoppelt.

19. Vorrichtung nach einem der vorhergehenden Ansprüche, bei der eine Befestigungsvorrichtung der zweiten optischen Faser zur Aufrechterhaltung der Ausrichtung einer optischen Ausgangsfaser vorgesehen ist, bei der die optische Ausgangsfaser so angeordnet ist, dass sie vom zweiten Multimode-Hohlfaser-Lichtwellenleiter Licht erhält.

20. Vorrichtung nach Anspruch 19, bei der die Befestigungsvorrichtung der zweiten optischen Faser so ausgebildet ist, dass sie eine Einmoden-Faser aufnimmt.

21. Vorrichtung nach einem der vorhergehenden Ansprüche, die ferner einen Strahlabsorber aufweist.

22. Vorrichtung nach einem der vorhergehenden Ansprüche, die in einem Substrat ausgebildet ist, das aus einem Halbleitermaterial besteht.

23. Vorrichtung nach Anspruch 20, bei dem das Substrat ein Silicium-on-Isolator(SOI)-Wafer ist.

24. Vorrichtung nach einem der vorhergehenden Ansprüche, bei der die Hohlfasern des ersten und des zweiten Multimode-Hohlfaser-Lichtwellenleiters aus einem Basisteil und einem Deckelteil bestehen.

25. Vorrichtung nach einem der vorhergehenden Ansprüche, die unter Anwendung von Mikroherstellungstechniken hergestellt wurde.

26. Vorrichtung nach Anspruch 25, wobei es sich bei der Mikroherstellungstechnik um tiefes reaktives Ionenätzen handelt.

27. Vorrichtung nach einem der vorhergehenden Ansprüche, bei dem die Hohlfaser-Lichtwellenleiter so angeordnet sind, dass sie Licht in eine Ebene lenken, die im Wesentlichen parallel zur Ebene des Substrats ist.

**Revendications**

1. Dispositif atténuateur optique variable comprenant un premier guide d'ondes optique multimodal à noyau creux (120 ; 140 ; 200) et une fibre optique d'entrée agencée pour injecter un faisceau d'entrée dans ledit premier guide d'ondes optique multimodal à noyau creux (120 ; 140 ; 200), un second guide d'ondes optique multimodal à noyau creux (122 ; 142 ; 202) couplé à une fibre optique de sortie et au moins un élément réfléchissant mobile (124 ; 144 ; 204) possédant une orientation angulaire variable par rapport à au moins un desdits premier et second guides d'ondes optiques multimodaux à noyaux creux, dans lequel le dispositif est agencé de sorte que, durant l'utilisation, le faisceau optique produit par le premier guide d'ondes optique multimodal à noyau creux soit réfléchi à partir de l'au moins un élément réfléchissant mobile et l'orientation angulaire de l'au moins un élément réfléchissant mobile détermine l'efficacité avec laquelle le faisceau optique est couplé dans le second guide d'ondes optique multimodal à noyau creux, moyennant quoi le dispositif est agencé de sorte que, durant l'utilisation de celui-ci, une reformation d'image du faisceau d'entrée se produise dans le voisinage de l'entrée de la fibre optique de sortie.

2. Dispositif selon la revendication 1, dans lequel ledit trajet optique comprend une région d'espace libre entre la sortie du premier guide d'ondes optique multimodal à noyau creux et l'entrée du second tel guide d'ondes, l'atténuateur étant agencé de sorte que, durant l'utilisation de celui-ci, un faisceau se propageant dans ladite région d'espace libre converge vers et/ou diverge à partir d'un point de reformation d'image.

3. Dispositif selon la revendication 1 ou la revendication 2, dans lequel ledit au moins un élément réfléchissant mobile possède un alignement angulaire contrôlable par rapport à au moins un desdits premier et second guides d'ondes optiques.

4. Dispositif selon la revendication 3, agencé de sorte que, durant l'utilisation, la variation de l'orientation angulaire de l'élément réfléchissant mobile ne produise sensiblement aucun déplacement latéral du faisceau optique par rapport au second guide d'ondes optique à noyau creux.

5. Dispositif selon la revendication 1 ou la revendication 2, dans lequel ledit au moins un élément réfléchissant mobile possède une position contrôlable par rapport à au moins un desdits premier et second guides d'ondes optiques.

6. Dispositif selon une quelconque des revendications précédentes, dans lequel les premier et second guides d'ondes optiques à noyaux creux sont formés dans un substrat commun.

7. Dispositif selon la revendication 6, dans lequel l'élément réfléchissant mobile comprend un composant de système micro-électro-mécanique (MEMS) formé dans le substrat commun.

8. Dispositif selon la revendication 6, dans lequel l'élément réfléchissant mobile comprend un composant MEMS hybride fixé au substrat commun.

9. Dispositif selon la revendication 8, dans lequel le composant réfléchissant mobile est maintenu en alignement dans une fente d'alignement formée dans le substrat commun.

10. Dispositif selon une quelconque des revendications précédentes, dans lequel l'élément réfléchissant mobile comprend un revêtement réfléchissant.

11. Dispositif selon une quelconque des revendications précédentes dans lequel l'élément réfléchissant mobile possède une surface réfléchissante incurvée.

12. Dispositif selon une quelconque des revendications précédentes, dans lequel l'élément réfléchissant mobile comprend au moins un miroir déformable.

13. Dispositif selon une quelconque des revendications précédentes et comprenant en outre au moins un élément réfléchissant supplémentaire possédant une orientation fixe, dans lequel, durant l'utilisation, le faisceau optique est réfléchi à la fois à partir de l'au moins un élément réfléchissant supplémentaire et de l'au moins un élément réfléchissant mobile.

**14.** Dispositif selon une quelconque des revendications précédentes, dans lequel des guides d'ondes optiques à noyaux creux supplémentaires sont prévus pour guider sensiblement le faisceau optique à partir du premier guide d'ondes optique multimodal à noyau creux jusqu'au second guide d'ondes optique multimodal à noyau creux.

**15.** Dispositif selon une quelconque des revendications précédentes, dans lequel le premier guide d'ondes optique multimodal à noyau creux et/ou le second guide d'ondes optique multimodal à noyau creux comprennent une section conique.

**16.** Dispositif selon une quelconque des revendications précédentes, dans lequel le premier guide d'ondes optique multimodal à noyau creux et/ou le second guide d'ondes optique multimodal à noyau creux sont de section transversale sensiblement rectangulaire.

**17.** Dispositif selon une quelconque des revendications précédentes, dans lequel les surfaces internes du premier guide d'ondes optique multimodal à noyau creux et/ou du second guide d'ondes optique multimodal à noyau creux supportent un revêtement réfléchissant.

**18.** Dispositif selon une quelconque des revendications précédentes, dans lequel un premier moyen de fixation de fibre optique est prévu pour maintenir en alignement une fibre optique d'entrée, la fibre optique d'entrée étant agencée pour coupler la lumière dans le premier guide d'ondes optique multimodal à noyau creux.

**19.** Dispositif selon une quelconque des revendications précédentes, dans lequel un second moyen de fixation de fibre optique est prévu pour maintenir en alignement une fibre optique de sortie, la fibre optique de sortie étant agencée pour recevoir la lumière à partir du second guide d'ondes optique multimodal à noyau creux.

**20.** Dispositif selon la revendication 19, dans lequel le second moyen de fixation de fibre optique est agencé pour recevoir une fibre optique monomodale.

**21.** Dispositif selon une quelconque des revendications précédentes, comprenant en outre une évacuation de faisceau.

**22.** Dispositif selon une quelconque des revendications précédentes qui est formé dans un substrat comprenant un matériau semi-conducteur.

**23.** Dispositif selon la revendication 20, dans lequel le substrat comprend une tranche de silicium sur isolant (SOI).

**24.** Dispositif selon une quelconque des revendications précédentes, dans lequel les noyaux creux des premier et second guides d'ondes optiques multimodaux à noyaux creux sont formés par une partie de base et une partie de couvercle.

**25.** Dispositif selon une quelconque des revendications précédentes, formé par des techniques de microfabrication.

**26.** Dispositif selon la revendication 25, dans lequel la technique de microfabrication comprend une gravure ionique réactive profonde.

**27.** Dispositif selon une quelconque des revendications précédentes, dans lequel les guides d'ondes optiques à noyaux creux sont agencés pour guider la lumière dans un plan sensiblement parallèle au plan du substrat.

# Fig.1.
## (Prior Art)

# Fig.2.

# Fig.3.

λ/w = 1.55μm/125μm = 12.4 mrad

# Fig.4.

# Fig.5.

# Fig.6.

# Fig.7.

# Fig.8.

# Fig.9.

# Fig.10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0175503 A
- US 4516827 A
- US 5915063 A
- US 6137941 A
- US 20030012509 A1
- GB 2309608 A
- US 20020150378 A
- US 20020150377 A
- WO 03036348 A
- GB 2003000331 PCT
- US 5410625 A

**Non-patent literature cited in the description**

- **T. MIURA et al.** *Japanese Journal of Applied Physics,* 2003, vol. 42, 3477-3478
- **LEE.** *Electronics Letters,* October 1999, vol. 35 (21
- **E. D. PALIK.** handbook of optical constants. Academic Press, 1998
- **MARC MADOU.** Fundamental of Microfabrication. CRC Press, 1997